# EUROPEAN PATENT SPECIFICATION

(11) **EP 3 500 628 B1**
(45) Date of publication and mention of the grant of the patent: **09.12.2020**
(21) Application number: 17727204.4
(22) Date of filing: 31.05.2017
(51) Int. Cl.: C08L 69/00, C08L 67/03, C08K 3/22, C08K 3/00, H05K 1/03

(54) **THERMOPLASTIC COMPOSITION FOR LASER DIRECT STRUCTURING**
THERMOPLASTISCHE ZUSAMMENSETZUNG ZUR LASERDIREKTSTRUKTURIERUNG
COMPOSITION THERMOPLASTIQUE POUR STRUCTURATION DIRECTE AU LASER

(30) Priority: 22.08.2016 EP 16185146
(43) Date of publication of application: 26.06.2019
(73) Proprietor: MEP Europe B.V., 6167 RD Geleen (NL)
(72) Inventor: SCHRAUWEN, Bernardus Antonius Gerardus, 6167 RD Geleen (NL)
(74) Representative: Ishiguro, Masaoki
(86) International application number: PCT/EP2017/063191
(87) International publication number: WO 2017/186972

(56) References cited:
- WO-A1-2015/155376

## Description

The present invention relates to a thermoplastic composition comprising a thermoplastic resin and a laser direct structuring additive. The invention also relates to a molded part comprising the composition. The invention also relates to a process for producing a circuit carrier by providing the molded part with a conductive track by a laser radiation and a subsequent metallization, and the circuit carrier obtainable thereby.

Polymer compositions comprising a polymer and a laser direct structuring (LDS) additive are for example described in WO 2015/155376, US-B2-7060421 and WO-A-2009024496. Such polymer compositions can advantageously be used in an LDS process for producing a non-conductive part on which conductive tracks are to be formed by irradiating areas of said part with laser radiation to activate the plastic surface at locations where the conductive path is to be situated and subsequently metalizing the irradiated areas to accumulate metal on these areas.

Important properties of aromatic polycarbonate resin compositions comprising an LDS additive include flame retardancy.

It is an object of the invention to provide a polymer composition which can produce a molded article suitable for applications requiring high flame retardancy.

Accordingly, the present invention provides a thermoplastic composition comprising:
a) an aromatic polycarbonate resin;
b) a laser direct structuring additive and
c) a polyarylate resin
wherein the total amount of the components a) and c) is 75-99.5 wt% with respect to the total composition,
wherein a molded part of the composition is capable of achieving UL94 V1 or V0 rating at a thickness of 3.0 mm (±10%) and/or UL94 V1 or V0 rating at a thickness of 1.5 mm (±10%).

It will be appreciated that the feature "a molded part of the composition is capable of achieving UL94 V1 rating" means that a molded part of the composition would obtain UL94 V1 rating when tested. Thus, said feature can also be rewritten as "a molded part of the composition has UL94 V1 rating", i.e. "is capable of achieving" can be replaced by "has" without changing its meaning. Accordingly, the present invention provides a thermoplastic composition comprising:
a) an aromatic polycarbonate resin;
b) a laser direct structuring additive and
c) a polyarylate resin
wherein the total amount of the components a) and c) is 75-99.5 wt% with respect to the total composition,
wherein a molded part of the composition has UL94 V1 or V0 rating at a thickness of 3.0 mm (±10%) and/or UL94 V1 or V0 rating at a thickness of 1.5 mm (±10%).

It has surprisingly been found that the addition of a polyarylate resin to a composition comprising a polycarbonate resin and a laser direct structuring additive (herein sometimes referred as LDS additive) leads to a good flame retardancy sufficient for achieving UL94 V1 or V0 rating at a thickness of 3.0 mm (±10%) and/or 1.5 mm (±10%). It was found that the addition of a polyarylate resin results in the decrease in the flame out time.

Although it is sufficient in many cases that UL94 V1 rating is achieved, it is most preferred that UL94 V0 rating is achieved.

Although it is sufficient in many cases that a molded part of the composition is capable of achieving (has) at least UL94 V1 rating (i.e. V1 or V0 rating) at a thickness of 3.0 mm (±10%), it is most preferred that a molded part of the composition is capable of achieving (has) UL94 V1 or V0 rating at a thickness of 3.0 mm (±10%) and UL94 V1 or V0 rating at a thickness of 1.5 mm (±10%).

The composition according to the invention comprises suitable components for achieving the desired flame retardancy in combination with the polyarylate resin. In some preferred embodiments, the composition according to the invention further comprises a Si-containing rubber. In some preferred embodiments, the composition according to the invention further comprises a flame retardant. In some preferred embodiments, the composition according to the invention further comprises a Si-containing rubber and a flame retardant. In some preferred embodiments, the composition according to the invention further comprises a Si-containing rubber, but does not comprise a flame retardant. In some preferred embodiments, the composition according to the invention further comprises a flame retardant, but does not comprise a Si-containing rubber.

It was surprisingly found that the presence of the Si-containing rubber in combination with the polyarylate resin leads to a particularly good flame retardancy, whereas other types of rubber such as an MBS modifier had no such effect in combination with the polyarylate resin. Further, the effect of the polyarylate resin for further improving the flame retardancy is obtained when the composition comprises a further flame retardant.

In some embodiments, the addition of the polyarylate resin further improves the flame retardancy of a composition already having a good flame retardancy, as shown by a decrease in the flame out time. Accordingly, in some embodiments, a molded part of an identical reference composition in the absence of the polyarylate resin is capable of achieving (has) UL94 V1 or V0 rating at a thickness of 3.0 mm (±10%) and/or UL94 V1 or V0 rating at a thickness of 1.5 mm (±10%). It will be appreciated that the composition according to the invention has an equal or better UL94 rating than the identical reference composition. For example, if the composition according to the invention has UL 94 V1 rating at a thickness of 1.5 mm (±10%), an identical reference composition will not have UL 94 V0 rating at a thickness of 1.5 mm (±10%).

The presence of the polyarylate resin in the composition results in a good Vicat Softening Temperature. Preferably, the Vicat B50, which is Vicat Softening Temperature measured according to ISO 306 with a load of 50 N at a rate of 50°C/hour, of a molded part of the composition is higher than 140 °C. The high Vicat Softening Temperature is advantageous for creating an article from a circuit carrier made by providing a circuit structure on a molded part of the thermoplastic composition, without damaging the molded part. On such a circuit carrier sometimes electrical components or wires have to be mounted or connected by using soldering techniques. Possible soldering techniques include automatic soldering, micro wind soldering or hot bar soldering techniques in which low temperature lead-free solder paste can be used with a typical melt temperature of around 140°C. In order not to damage the surface underneath the circuit carrier, the thermoplastic composition should be able to withstand the temperature that is needed to melt this solder paste.

The invention further relates to a molded part comprising the thermoplastic composition according to the present invention. The invention relates in particular to a molded part produced by injection moulding of the composition according to the invention. The invention further also relates to an article, in particular a circuit carrier, that contains a molded part produced from the composition according to the invention and a conductive track provided thereon. In one embodiment, such a circuit carrier is used for producing an antenna.

The invention further relates to a process for producing such a circuit carrier, which process comprises the steps of providing a molded part comprising the thermoplastic composition according to the present invention, irradiating areas of said part on which conductive tracks are to be formed with laser radiation, and subsequently metallizing the irradiated areas. In a preferred embodiment, the laser irradiation is used to simultaneously release metal nuclei and effect ablation of the part while forming an adhesion-promoting surface. This provides a simple means to achieve excellent adhesive strength of the deposited metallic conductor tracks. The wavelength of the laser is advantageously 248 nm, 308 nm, 355 nm, 532 nm, 1064 nm or of even 10600 nm. The deposition of further metal onto the metal nuclei generated by laser radiation preferably takes place via plating processes. Said metallization is preferably performed by immersing the molded part in at least one electroless plating bath to form electrically conductive pathways on the irradiated areas of the molded part. Non-limiting examples of electroless plating processes are a copper plating process, gold plating process, nickel plating process, silver plating, zinc plating and tin plating. Preferably, the first plating is copper plating. The conductive track may have one or more layers. The first layer may e.g. be a copper layer and may be 8-16 µm, more typically 8-12 µm. If present, the second layer may e.g. be a nickel layer and may be 2-4 µm. If present, the third layer may be e.g. be a gold layer and may be 0.05-0.2 µm.

The irradiation of the molded part may e.g. be performed under conditions comprising a power of 2-15W, a frequency of 20-100 kHz and/or a speed of 1-5 m/s.

The irradiation of the molded part may e.g. be performed by UV light having a wavelength from 100 to 400 nm, visible light having a wavelength from 400 to 800 nm, or infrared light having a wavelength from 800 to 25 000 nm.

When the irradiation of the molded part is performed by UV light having a wavelength from 100 to 400 nm, it may be preferable that the molded part with the metallized areas is subjected to thermal processing for improving the delamination resistance. The thermal processing may be performed by subjecting the molded part to microwave e.g. by placing the molded part in a microwave oven. Preferably, the irradiation of the molded part is performed by visible light having a wavelength from 400 to 800 nm, or infrared light having a wavelength from 800 to 25 000 nm. These types of laser radiation are advantageous in that the metal layer on the irradiated areas has a relatively stronger adhesion strength without requiring thermal processing after the plating step. Most preferably, the irradiation of the molded part is performed by infrared light having a wavelength from 800 to 25 000 nm, in particular 1064 nm.

Preferably, the process for producing the circuit carrier does not comprise a step of thermal processing after the step of metallizing the irradiated areas. This is advantageous in view of allowing an efficient process.

Preferably, the Izod Notched impact strength at 23 °C (measured at a sample thickness of 4.0 mm or less according to ISO 180) of a molded part of the composition is higher than 20 kJ/m², more preferably higher than 30 kJ/m², more preferably higher than 40 kJ/m², more preferably higher than 50 kJ/m² and more preferably higher than 60 kJ/m².

The present invention further provides use of a polyarylate resin as an agent for reducing flame out time in a thermoplastic composition comprising a) an aromatic polycarbonate resin and b) a laser direct structuring additive,
wherein a molded part of a thermoplastic composition comprising: a) the aromatic polycarbonate resin; b) the laser direct structuring additive and c) the polyarylate resin, wherein the total amount of the components a) and c) is 75-99.5 wt% of the total composition, is capable of achieving (has) UL94 V1 or V0 rating at a thickness of 3.0 mm (±10%).

A further aspect of the present invention relates to a process for reducing flame out time of a thermoplastic composition comprising a) an aromatic polycarbonate resin and b) a laser direct structuring additive, wherein the process comprises incorporating into the composition an effective amount of a polyarylate resin,
wherein a molded part of a thermoplastic composition comprising: a) the aromatic polycarbonate resin; b) the laser direct structuring additive and c) the polyarylate resin, wherein the total amount of the components a) and c) is 75-99.5 wt% of the total composition, is capable of achieving (has) UL94 V1 or V0 rating at a thickness of 3.0 mm (±10%).

A further aspect of the present invention relates to the thermoplastic composition according to the invention for use in a laser direct structuring process.

A further aspect of the present invention relates to use of the thermoplastic composition according to the invention in a laser direct structuring process.

### Component a)

The thermoplastic composition according to the invention comprises an aromatic polycarbonate resin as component a). Preferably, the amount of the component a) is 30-70 wt%, for example at least 40-60 wt%, for example at least 45-55 wt%, with respect to the total composition.

The aromatic polycarbonate resin can be an aromatic polycarbonate homopolymer or an aromatic polycarbonate resin copolymer.

Polycarbonates including aromatic carbonate chain units include compositions having structural units of the formula (I):

-R¹-O-CO-O- (I)

in which the R¹ groups are aromatic, aliphatic or alicyclic radicals. Beneficially, R¹ is an aromatic organic radical and, in an alternative embodiment, a radical of the formula (II):

-A¹-Y¹-A²- (II)

wherein each of A¹ and A² is a monocyclic divalent aryl radical and Y¹ is a bridging radical having zero, one, or two atoms which separate A¹ from A². In an exemplary embodiment, one atom separates A¹ from A². Illustrative examples of radicals of this type are -O-, -S-, -S(O)-, -S(O2)-, -C(O)-, methylene, cyclohexyl-methylene, 2-[2,2,1]-bicycloheptylidene, ethylidene, isopropylidene, neopentylidene, cyclohexylidene, cyclopentadecylidene, cyclododecylidene, adamantylidene, or the like. In another embodiment, zero atoms separate A¹ from A², with an illustrative example being bisphenol. The bridging radical Y¹ can be a hydrocarbon group or a saturated hydrocarbon group such as methylene, cyclohexylidene or isopropylidene.

Suitable aromatic polycarbonate resins include polycarbonates made from at least a divalent phenol and a carbonate precursor, for example by means of the commonly known interfacial polymerization process or the melt polymersiation method. Suitable divalent phenols that may be applied are compounds having one or more aromatic rings that contain two hydroxy groups, each of which is directly linked to a carbon atom forming part of an aromatic ring. Examples of such compounds are: 4,4'-dihydroxybiphenyl, 2,2-bis(4-hydroxyphenyl)propane (bisphenol A), 2,2-bis(4-hydroxy-3-methylphenyl)propane, 2,2-bis-(3-chloro-4-hydroxyphenyl)-propane, 2,2-bis-(3,5-dimethyl-4-hydroxyphenyl)-propane, 2,4-bis-(4-hydroxyphenyl)-2-methylbutane, 2,4-bis-(3,5-dimethyl-4-hydroxyphenyl)-2-methylbutane, 4,4-bis(4-hydroxyphenyl)heptane, bis-(3,5-dimethyl-4-hydroxyphenyl)-methane, 1,1-bis-(4-hydroxyphenyl)-cyclohexane, 1,1-bis-(3,5-dimethyl-4-hydroxyphenyl)-cyclohexane, 2,2-(3,5,3',5'-tetrachloro-4,4'-dihydroxydiphenyl)propane, 2,2-(3,5,3',5'-tetrabromo-4,4'-dihydroxydiphenyl)propane, (3,3'-dichloro-4,4'-dihydroxyphenyl)methane, bis-(3,5-dimethyl-4-hydroxyphenyl)-sulphon, bis-4-hydroxyphenylsulphon, bis-4-hydroxyphenylsulphide.

The carbonate precursor may be a carbonyl halogenide, a halogen formate or carbonate ester. Examples of carbonyl halogenides are carbonyl chloride and carbonyl bromide. Examples of suitable halogen formates are bis-halogen formates of divalent phenols such as hydroquinone or of glycols such as ethylene glycol. Examples of suitable carbonate esters are diphenyl carbonate, di(chlorophenyl)carbonate, di(bromophenyl)carbonate, di(alkylphenyl)carbonate, phenyltolylcarbonate and the like and mixtures thereof. Although other carbonate precursors may also be used, it is preferred to use the carbonyl halogenides and in particular carbonylchloride, also known as phosgene.

The aromatic polycarbonate resins in the composition according to the invention may be prepared using a catalyst, an acid acceptor and a compound for controlling the molecular mass.

Examples of catalysts are tertiary amines such as triethylamine, tripropylamine and N,N-dimethylaniline, quaternary ammonium compounds such as tetraethylammoniumbromide and quaternary phosphonium compounds such as methyltriphenylfosfoniumbromide.

Examples of organic acid acceptors are pyridine, triethylamine, dimethylaniline and so forth. Examples of inorganic acid acceptors are hydroxides, carbonates, bicarbonates and phosphates of an alkali metal or earth alkali metal.

Examples of compounds for controlling the molecular mass are monovalent phenols such as phenol, p-alkylphenols and para-bromophenol and secondary amines.

When the aromatic polycarbonate resin is an aromatic polycarbonate resin copolymer, the copolymer is preferably polysiloxane-polycarbonate copolymer.

Examples of the polysiloxane-polycarbonate copolymer are described e.g. in US5380795 and WO09040772, as follows:
The polysiloxane (also referred to as "polydiorganosiloxane") blocks of the copolymer comprise repeating siloxane units (also referred to as "diorganosiloxane units") of formula (1): 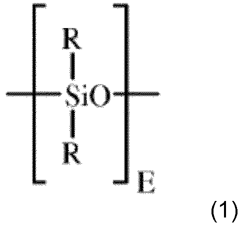 wherein each occurrence of R is same or different, and is a C₁₋₁₃ monovalent organic radical. For example, R can independently be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₄ aryl group, C₆-C₁₀ aryloxy group, C₇-C₁₃ arylalkyl group, C₇-C₁₃ arylalkoxy group, C₇-C₁₃ alkylaryl group, or C₇-C₁₃ alkylaryloxy group. The foregoing groups can be fully or partially halogenated with fluorine, chlorine, bromine, or iodine, or a combination thereof. Combinations of the foregoing R groups can be used in the same copolymer.

The value of E in formula (1) can vary widely depending on the type and relative amount of each component in the thermoplastic composition, the desired properties of the composition, and like considerations. Generally, E can have an average value of 2 to 1,000, specifically 2 to 500, and more specifically 5 to 100. In one embodiment, E has an average value of 10 to 75, and in still another embodiment, E has an average value of 20 to 60. Where E is of a lower value, e.g., less than 40, it can be desirable to use Si-containing rubber in combination, possibly in a higher amount. For example, the composition comprising the polysiloxane-polycarbonate copolymer can comprise a low amount of the thermoplastic resin and a high amount of the Si-containing rubber. Conversely, where E is of a higher value, e.g., greater than 40, it can be desirable that the composition comprising the polysiloxane-polycarbonate copolymer comprises a high amount of the thermoplastic resin and a low amount of the Si-containing rubber.

A combination of a first and a second (or more) polysiloxane-polycarbonate copolymer can be used, wherein the average value of E of the first copolymer is less than the average value of E of the second copolymer.

In one embodiment, the polydiorganosiloxane blocks are provided by repeating structural units of formula (2): 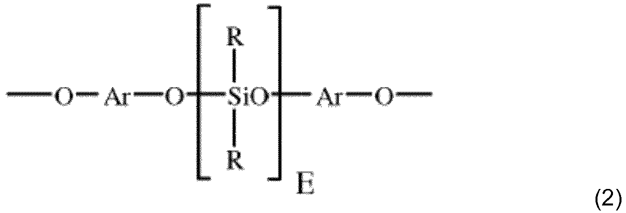 wherein E is as defined above; each R can independently be the same or different, and is as defined above; and each Ar can independently be the same or different, and is a substituted or unsubstituted C₆-C₃₀ arylene radical, wherein the bonds are directly connected to an aromatic moiety. Useful Ar groups in formula (2) can be derived from a C₆-C₃₀ dihydroxyarylene compound, for example a dihydroxyarylene compound. Combinations comprising at least one of the foregoing dihydroxyarylene compounds can also be used. Specific examples of dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4- hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-l-methylphenyl) propane, 1,1-bis(4-hydroxyphenyl) cyclohexane, bis(4-hydroxyphenyl sulphide), and 1,1-bis(4-hydroxy-t-butylphenyl) propane. Combinations comprising at least one of the foregoing dihydroxy compounds can also be used.

Units of formula (2) can be derived from the corresponding dihydroxy compound of formula (3): 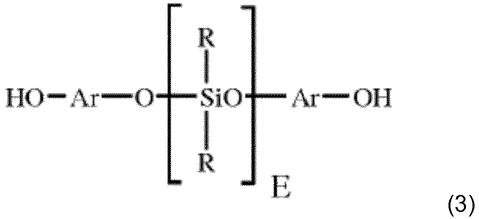 wherein R, Ar, and E are as described above. Compounds of formula (3) can be obtained by the reaction of a dihydroxyarylene compound with, for example, an alpha, omega- bisacetoxypolydiorangonosiloxane under phase transfer conditions.

In another embodiment, polydiorganosiloxane blocks comprise units of formula (4): 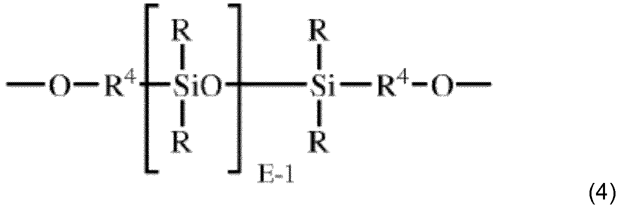 wherein R and E are as described above, and each occurrence of R is independently a divalent C₁-C₃₀ alkylene, and wherein the polymerized polysiloxane unit is the reaction residue of its corresponding dihydroxy compound. In a specific embodiment, the polydiorganosiloxane blocks are provided by repeating structural units of formula (5): 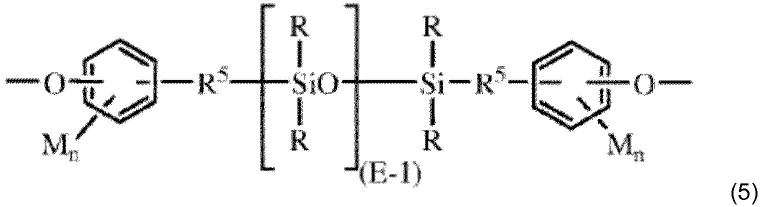 wherein R and E are as defined above. Each R⁵ in formula (5) is independently a divalent C₂-C₈ aliphatic group. Each M in formula (5) can be the same or different, and can be a halogen, cyano, nitro, C₁-C₈ alkylthio, C₁-C₈ alkyl, C₂-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ arylalkyl, C₇-C₁₂ arylalkoxy, C₇-C₁₂ alkylaryl, or C₇-C₁₂ alkylaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; R⁵ is a dimethylene, trimethylene or tetramethylene group; and R is a Ci_s alkyl, haloalkyl such as trifluoropropyl, cyanoalkyl, or aryl such as phenyl, chlorophenyl or tolyl. In another embodiment, R is methyl, or a mixture of methyl and trifluoropropyl, or a mixture of methyl and phenyl. In still another embodiment, M is methoxy, n is one, R⁵ is a divalent C₁-C₃ aliphatic group, and R is methyl.

Units of formula (5) can be derived from the corresponding dihydroxy polydiorganosiloxane (6): 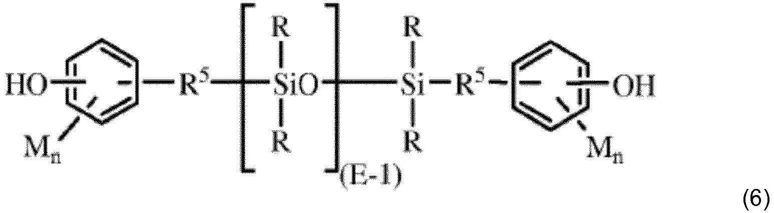 wherein R, E, M, R⁵, and n are as described above. Such dihydroxy polysiloxanescan be made by effecting a platinum catalyzed addition between a siloxane hydride of formula (7): 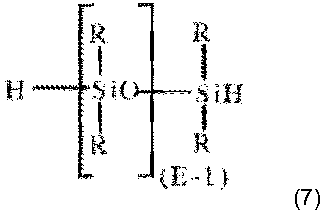 wherein R and E are as previously defined, and an aliphatically unsaturated monohydric phenol. Useful aliphatically unsaturated monohydric phenols included, for example, eugenol, 2-allylphenol, 4-allyl-2-methylphenol, 4-allyl-2-phenylphenol, 4-allyl-2-bromophenol, A- allyl-2-t-butoxyphenol, 4-phenyl-2-phenylphenol, 2-methyl-4-propylphenol, 2-allyl-4,6- dimethylphenol, 2-allyl-4-bromo-6-methylphenol, 2-allyl-6-methoxy-4-methylphenol and 2- allyl-4,6-dimethylphenol. Mixtures comprising at least one of the foregoing can also be used.

In an exemplary embodiment, the polysiloxane block is a poly(dimethyl siloxane) (PDMS) block.

The polysiloxane-polycarbonate can comprise 85 to 99 weight percent of carbonate units and 1 to 15 weight percent siloxane units. Within this range, the polysiloxane-polycarbonate copolymer can comprise 88, 90, 92, 94, 96, or 98 weight percent of carbonate units and correspondingly 2, 4, 6, 8, 10, or 12 weight percent of siloxane units. In a specific embodiment, the polysiloxane-polycarbonate comprises 85 to 98 weight percent of carbonate units and 2 to 15 weight percent siloxane units. In another specific embodiment, the polysiloxane-polycarbonate comprises 90 to 98 weight percent of carbonate units and 2 to 10 weight percent siloxane units.

In an embodiment, the polysiloxane-polycarbonate can comprise polysiloxane units, and carbonate units derived from bisphenol A. Polysiloxane-polycarbonates can have a weight average molecular weight of 2,000 to 100,000, specifically 5,000 to 50,000 as measured by gel permeation chromatography using a crosslinked styrene-divinyl benzene column, at a sample concentration of 1 milligram per milliliter, and as calibrated with polycarbonate standards.

The polysiloxane-polycarbonate can have a melt volume flow rate, measured at 300 degrees centigrade under a load of 1.2 kg, of 1 to 50 cubic centimeters per 10 minutes (cc/10 min), specifically 2 to 30 cc/10 min. Mixtures of polysiloxane-polycarbonates of different flow properties can be used to achieve the overall desired flow property. In an embodiment, exemplary polysiloxane-polycarbonates are marketed under the trade name LEXAN^{(R)} EXL polycarbonates, available from Sabic Innovative Plastics.

### Component b)

The thermoplastic composition according to the invention comprises a laser direct structuring additive as component b). Preferably, the amount of the component b) is at least 0.5 wt%, more preferably at least 1 wt%, more preferably at least 3 wt%, more preferably at least 5 wt%, with respect to the total composition. Preferably, the amount of the component b) is 0.5-25 wt%, more preferably 1-20 wt%, more preferably 3-15 wt%, more preferably 5-10 wt%, with respect to the total composition.

The term "laser direct structuring additive" or "LDS additive" is known and used e.g. in e.g. WO2013/076314, WO2012/126831, EP2291290B1 and WO2009/024496. In a laser direct structuring process, a thermoplastic composition comprising a thermoplastic resin and a laser direct structuring additive is provided and the thermoplastic composition is irradiated at areas on which conductive tracks are to be formed with laser radiation. Subsequently the irradiated areas are selectively metalized to form conductive tracks. No metallization occurs on the areas that are not irradiated with laser radiation. The metallization can be done e.g. by a standard electroless plating process, such as a copper plating process.

Without wanting to be bound by any theory, it is believed that the laser direct structuring additive may be capable of being activated by laser radiation and thereby form elemental metal particles. It is believed that these metal particles act as nuclei for copper deposition in a standard electroless copper plating process and form the basis for the formation of conductive tracks. It is also possible that the radiation is not directly absorbed by the laser direct structuring additive, but is absorbed by other substances which then transfer the absorbed energy to the laser direct structuring additive and thus bring about the liberation of elemental metal.

The laser radiation may be UV light (wavelength from 100 to 400 nm), visible light (wavelength from 400 to 800 nm), or infrared light (wavelength from 800 to 25 000 nm). The laser radiation is preferably infrared light radiation, more preferably with a wavelength of 1064 nm.

Examples of the suitable LDS additives include a heavy metal mixture oxide spinel, such as copper containing spinels such as copper chromium oxide spinel, copper molybdenum oxide spinel and copper chromium manganese oxide spinel; a copper salt, such as copper hydroxide phosphate copper phosphate, copper sulfate, cuprous thiocyanate; organic metal complexes (such as palladium/palladium-containing heavy metal complexes); tin containing oxides such as antimony tin oxide (antimony-doped tin oxide), bismuth tin oxide (bismuth-doped tin oxide), aluminum tin oxide (aluminum-doped tin oxide) and molybdenum tin oxide (molybdenum-doped tin oxide); a zinc containing metal oxide such as aluminum zinc oxide (aluminum-doped zinc oxide), ZnₓNi₁₋ₓFe₂O₄, wherein the x is higher than 0.60 and lower than 0.85; a tin containing metal oxide; a magnesium containing metal oxide; an aluminum containing metal oxide; a gold containing metal oxide; a silver containing metal oxide; and combinations thereof.

Preferred examples of the LDS additives include copper containing spinels, antimony tin oxide, copper hydroxide phosphate copper phosphate and aluminum zinc oxide.

Copper chromium oxide spinel that can be used as the LDS additives include the ones such as sold under commercial name LD 5 from Shepherd Technologies.

Preferred examples of the LDS additives comprise antimony-doped tin oxide and having a CIELab colour value L* of at least 45, as described in WO2012/126831. Examples include Lazerflair 825, Lazerflair 820, Minatec 230 A-IR from Merck KGaA.

Further examples of the preferred LDS additives include a mixed metal oxide comprising at least tin and a second metal selected from the group consisting of antimony, bismuth, aluminum and molybdenum, wherein the LDS additive comprises at least 40 wt% of tin and wherein the weight ratio of the second metal to tin is at least 0.02:1 as described in WO2013/076314.. Examples include Stanostat CP5C from Keeling & Walker and 25-3511 PK from Ferro.

### Component c)

The thermoplastic composition according to the invention comprises a polyarylate resin as component c). Preferably, the amount of the component c) is 10-50 wt%, for example 20-40 wt%, for example 25-35 wt%, with respect to the total composition.

In the present invention, a polyarylate resin means a polyester constituted of aromatic dicarboxylic acid residues and residues of bisphenols. The polyarylate resin can be produced by a heretofore known, conventional method such as melt polymerization or interface polymerization.

Specific examples of the aromatic dicarboxylic acid include: terephthalic acid, isophthalic acid, phthalic acid, 2,5-naphthalene dicarboxylic acid, 2,6-naphthalene dicarboxylic acid, 2,7-naphthalene dicarboxylic acid, 1,5-naphthalene dicarboxylic acid, methylterephthalic acid, 4,4'-biphenyl dicarboxylic acid, 2,2'-biphenyl dicarboxylic acid, 4,4'-biphenylether dicarboxylic acid, 4,4'-diphenylmethane dicarboxylic acid, 4,4'-diphenylsulfone dicarboxylic acid, 4,4'-diphenylisopropylidene dicarboxylic acid, 1,2-bis(4-carboxyphenoxy)ethane and 5-sodium sulfoisophthalic acid.

Among the aforementioned examples, terephthalic acid and isophthalic acid are preferable as the aromatic dicarboxylic acid, and it is particularly preferable to use a mixture of these two acids, from the viewpoint of the melt workability and mechanical properties.

The molar ratio between terephthalic acid and isophthalic acid (terephthalic acid/isophthalic acid) is optional within a range from 100/0 to 0/100. In particular, the molar ratio is preferably 70/30 to 30/70 and more preferably 60/40 to 40/60, from the viewpoint of the melt workability, mechanical properties and polymerization, and the discoloration resistance of the obtained polyarylate resin resin.

Within the molar ratio between terephthalic acid and isophthalic acid, it is preferable to use isophthalic acid in excess over terephthalic acid for the purpose of improving the discoloration resistance against light (in particular, ultraviolet light). Alternatively, it is preferable to use terephthalic acid in excess over isophthalic acid for the purpose of improving the heat resistance.

Examples of the bisphenols include: 2,2-bis(4-hydroxyphenyl)propane (bisphenol A), 2,2-bis(4-hydroxy-3,5-dimethylphenyl)propane, 2,2-bis(4-hydroxy-3,5-dibromophenyl)propane, 2,2-bis(4-hydroxy-3,5-dichlorophenyl)propane, 4,4'-dihydroxydiphenyl sulfone, 4,4'-dihydroxydiphenyl ether, 4,4'-dihydroxydiphenyl sulfide, 4,4'-dihydroxydiphenyl ketone, 4,4'-dihydroxydiphenylmethane, 1,1-bis(4-hydroxyphenyl)cyclohexane, 1,1-bis(4-hydroxyphenyl)-3,3,5-trimethylcyclohexane (bisphenol TMC) and 2-phenyl-3,3-bis(4-hydroxyphenyl)phthalimidine (PPPBP). These bisphenols may be used each alone or as mixtures of two or more thereof.

Among the aforementioned bisphenols, 2,2-bis(4-hydroxyphenyl)propane is preferably used from the viewpoint of cost performance and polymerizability. Alternatively, bisphenol TMC and PPPBP are preferably used from the viewpoint of heat resistance.

The inherent viscosity of the polyarylate resin falls within a range preferably from 0.3 to 1.0 dl/g, more preferably from 0.35 to 0.7 dl/g, furthermore preferably from 0.38 to 0.6 dl/g and particularly preferably from 0.40 to 0.55 dl/g.

When the inherent viscosity of the polyarylate resin is less than 0.3 dl/g, the obtained resin composition is low in molecular weight, and hence may sometimes be poor in mechanical properties and heat resistance. Conversely, when the inherent viscosity of the polyarylate resin exceeds 1.0 dl/g, the obtained resin composition may be too high in melt viscosity, and hence sometimes undergoes discoloration and fluidity decrease during melt processing. The inherent viscosity as referred to in the present invention means a value measured with a solution set at a temperature of 25 °C, the solution being prepared by dissolving 1.0 g of a sample in 100 ml of 1,1,2,2-tetrachloroethane.

### Total of a) and c)

The total amount of the components a) and c) is 75-99.5 wt% with respect to the total composition. Preferably, the total amount of the aromatic polycarbonate resin and the polyarylate resin is 80-99 wt%, for example 85-97 wt%, for example 87-95 wt%, with respect to the total composition.

### Total of a), b) and c)

Preferably, the total amount of the components a), b) and c) is at least 80 wt% of the total composition. The total amount of components a), b) and c) may be 85-100 wt%, for example 90-99 wt%, for example 92-95 wt%, with respect to the total composition.

### component d)

The thermoplastic composition according to the invention may further comprise d) a Si containing rubber.

Preferably, the amount of the component d) is 0-20 wt% or 1-20 wt%, more preferably 2-15 wt%, more preferably 3-10 wt%, with respect to the total composition. The presence of the component d) is optional, and hence the composition according to the invention may comprise little or no component d). For example, the amount of the component d) may be less than 1 wt%, less than 0.5 wt% or 0 wt%, with respect to the total composition.

Component d) is preferably a graft copolymer comprising an elastomeric component containing Si. The graft copolymer is formed by graft-copolymerizing an elastomeric component containing Si with a monomer component copolymerizable therewith. The elastomeric component generally has a glass transition temperature of at most 0 °C, preferably at most -20 °C, more preferably-30 °C.

As the graft copolymer for use in the invention, core/shell type graft copolymers are preferable wherein the core is the elastomeric component containing Si. The elastomeric component containing Si is preferably polyorganosiloxane.

Component d) is preferably a polyorganosiloxane containing graft copolymer preferably prepared by polymerizing 5 to 60 parts by weight of a vinyl monomer (I) in the presence of 40 to 95 parts by weight of polyorganosiloxanes particles (II) (the sum of (I) and (II) is 100 parts by weight), as for example described in US2005/0143520. Examples of the vinyl monomers (I) include, for example, aromatic vinyl monomers such as styrene, alpha -methylstyrene, p-methylstyrene, and p-butylstyrene; vinylcyanide monomers such as acrylonitrile and methacrylonitrile; (meth)acrylic acid ester monomers such as methyl acrylate, ethyl acrylate, propyl acrylate, butyl acrylate, 2-ethylhexyl acrylate, glycidyl acrylate, hydroxyethyl acrylate, hydroxybutyl acrylate, methyl methacrylate, ethyl methacrylate, butyl methacrylate, lauryl methacrylate, glycidyl methacrylate, and hydroxyethyl methacrylate; and carboxyl-group-containing vinyl monomers such as itaconic acid, (meth)acrylic acid, fumaric acid, and maleic acid. The vinyl monomer (a-l) may include a multifunctional monomer having at least two polymerizable unsaturated bonds per molecule, if necessary. Examples of the multifunctional monomers include allyl methacrylate, triallyl cyanurate, triallyl isocyanurate, diallyl phthalate, ethylene glycol dimethacrylate, 1 ,3-butylene glycol dimethacrylate, and divinylbenzene. The vinyl monomer (I) may be used alone or in combination. The polyorganosiloxane particles (II) are preferably prepared by emulsion polymerization of the constituent components. A normal seeded emulsion polymerization can be applied to the graft copolymerization and can be achieved by radical-polymerizing the vinyl monomer (I) in latex of the polyorganosiloxane particles (II).

These graft copolymers comprising polyorganosiloxane are commercially available, e.g. as Kane Ace MR01 and Kane Ace MR02 from Kaneka Company.

Other materials suitable as component d) include Metablen S-2001, Metablen S-2200 and Metablen SX05 from Mitsubishi Rayon.

### Total of a), b), c) and d)

Preferably, the total amount of the components a), b), c) and d) is at least 85 wt% of the total composition. The total amount of components a), b), c) and d) may be 90-100 wt%, for example 90-99 wt%, for example 92-95 wt%, with respect to the total composition.

### component e)

The thermoplastic composition according to the invention may further comprise e) a flame retardant.

The term "flame retardant" is understood as the compounds which are generally used as a flame retardant in a thermoplastic polymer composition, particularly a polycarbonate composition. It will be appreciated that the term "flame retardant" does not include components described as a different component herein (such as a), b), c), d), f), g)), even when they may have the effect of flame retardancy.

Preferably, the amount of the component e) is 0-20 wt% or 0.01-20 wt%, more preferably 0.1-15 wt%, more preferably 1-10 wt%, with respect to the total composition. The presence of the component e) is optional, and hence the composition according to the invention may comprise little or no component e). For example, the amount of the component e) may be less than 1 wt%, less than 0.5 wt% or 0 wt%, with respect to the total composition.

The flame retardants may be an inorganic flame retardant or an organic flame retardant.

Examples of inorganic flame retardants include sulfonate salts such as potassium perfluorobutane sulfonate (Rimar salt) and potassium diphenylsulfone sulfonate; salts formed by reacting for example an alkali metal or alkaline earth metal (preferably lithium, sodium, potassium, magnesium, calcium and barium salts) and an inorganic acid complex salt, for example, an oxo-anion, such as alkali metal and alkaline-earth metal salts of carbonic acid, such as Na2CO3, K2CO3. MgCO3, CaCO3, BaCO3, and BaCO3 or fluoro-anion complex such as Li3AIF6, BaSiF6, KBF4, K3AIF6, KAIF4, K2SiF6, and/or Na3AIF6or the like. Inorganic flame retardants are advantageous for the purpose of maintaining Vicat temperature.

Examples of organic flame retardants include an organic phosphate and/or an organic compound containing phosphorus-nitrogen bonds.

One type of exemplary organic phosphate is an aromatic phosphate of the formula (GO)₃P=O, wherein each G is independently an alkyl, cycloalkyl, aryl, alkaryl, or aralkyl group, provided that at least one G is an aromatic group. Two of the G groups may be joined together to provide a cyclic group, for example, diphenyl pentaerythritol diphosphate, which is described by Axelrod in U.S. Pat. No. 4,154,775. Other suitable aromatic phosphates may be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphates, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 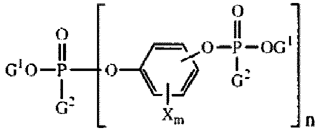 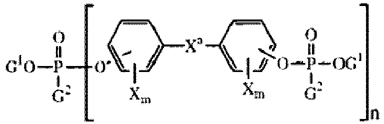 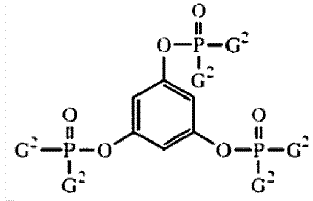 wherein each G¹ is independently a hydrocarbon having 1 to 30 carbon atoms; each G² is independently a hydrocarbon or hydrocarbonoxy having 1 to 30 carbon atoms; each X is independently a bromine or chlorine; m 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A (. respectively, their oligomeric and polymeric counterparts, and the like. Methods for the preparation of the aforementioned di- or polyfunctional aromatic compounds are described in British Patent No. 2,043,083.

The thermoplastic compositions of the present invention may be essentially free of chlorine and bromine, particularly chlorine and bromine flame-retardants, which may be defined as having a bromine and/or chlorine content of less than 100 ppm, less than 75 ppm or less than 50 ppm with respect to the total composition.

### Total of a), b), c), and e)

Preferably, the total amount of the components a), b), c) and e) is at least 85 wt% of the total composition. The total amount of components a), b), c) and e) may be 90-100 wt%, for example 90-99 wt%, for example 92-95 wt%, with respect to the total composition.

### Total of a), b), c), d) and e)

Preferably, the total amount of the components a), b), c), d) and e) is at least 85 wt% of the total composition. The total amount of components a), b), c), d) and e) may be 90-100 wt%, for example 90-99 wt%, for example 92-95 wt%, with respect to the total composition.

### Component f) anti-drip agent

The thermoplastic composition according to the invention may further comprise f) an anti-drip agent.

Preferably, the amount of the component f) is 0-2.0 wt% or 0.05-2.0 wt%, more preferably 0.1-1.5 wt%, more preferably 0.2-1.0 wt%, with respect to the total composition. The presence of the component f) is optional, and hence the composition according to the invention may comprise little or no component f). For example, the amount of the component d) may be less than 0.05 wt%, less than 0.01 wt% or 0 wt%, with respect to the total composition.

Suitable examples of anti-drip agents include fluoropolymers such as polytetrafluoroethylene (PTFE). The fluoropolymers may be a fibril forming fluoropolymer such as fibril forming polytetrafluoroethylene (PTFE) or a non-fibril forming fluoropolymer such as non-fibril forming polytetrafluoroethylene.

The anti-drip agent may be in the form of an (aqueous) dispersion of a fluoropolymer. In this case, the dispersion contains a sufficient amount of a fluoropolymer, e.g. at least 30 wt% or at least 50 wt% of the dispersion.

The anti-drip agent may be in the form of a mixture of a fluoropolymer and a further polymer, for example an encapsulated fluoropolymer. In this case, the dispersion contains a sufficient amount of a fluoropolymer, e.g. at least 30 wt% or at least 50 wt% of the mixture. The further polymer may e.g. be an acrylate copolymer or styreneacrylonitrile. An example of a mixture of a fluoropolymer and an acrylate polymer is commercially available as METABLEN A-3800 from Mitsubishi Rayon. An encapsulated fluoropolymer may be made by polymerizing the polymer in the presence of the fluoropolymer.

Preferably, the anti-drip agent is a mixture of a fluoropolymer and a further polymer, such as an encapsulated fluoropolymer. Such anti-drip can be handled better compared to an anti-drip agent in the form of a dispersion, since the feeding in an extruder is easier and no removal of water from the composition is required.

### Total of a), b), c) and f)

Preferably, the total amount of the components a), b), c) and f) is at least 85 wt% of the total composition. The total amount of components a), b), c) and f) may be 90-100 wt%, for example 90-99 wt%, for example 92-95 wt%, with respect to the total composition.

### Total of a), b), c), d) and f)

Preferably, the total amount of the components a), b), c), d) and f) is at least 85 wt% of the total composition. The total amount of components a), b), c), d) and f) may be 90-100 wt%, for example 90-99 wt%, for example 92-95 wt%, with respect to the total composition.

### Total of a), b), c), e) and f)

Preferably, the total amount of the components a), b), c), e) and f) is at least 85 wt% of the total composition. The total amount of components a), b), c), e) and f) may be 90-100 wt%, for example 90-99 wt%, for example 92-95 wt%, with respect to the total composition.

### Total of a), b), c), d), e) and f)

Preferably, the total amount of the components a), b), c), d), e) and f) is at least 85 wt% of the total composition. The total amount of components a), b), c), d), e) and f) may be 90-100 wt%, for example 90-99 wt%, for example 92-95 wt%, with respect to the total composition.

### Component g) white pigment

The thermoplastic composition according to the invention may further comprise f) a white pigment selected from TiO₂, ZnO and BaSO₄, preferably TiO₂.

Preferably, the amount of the component g) is 0-20 wt% or 0.1-20 wt%, more preferably 0.5-15 wt%, more preferably 1-10 wt%, with respect to the total composition. A white or a light colored thermoplastic composition can be thereby obtained. The white pigment is advantageous in that the pigments or dyes of other colors may be added to give a desired color to the composition, as long as their amounts do not interfere with the desired properties of the composition. Other pigments and dyes for giving the thermoplastic composition desired colours are known to the skilled person and are commercially available. Known pigments include metal oxides available from companies such as Ferro, The Shepherd Color Company, Heubach, Rockwood Pigments, Tomatec and Broll-Buntpigmente.

### Total of a), b), c), d), e), f) and g)

Preferably, the total amount of the components a), b), c), d), e), f) and g) is at least 90 wt% of the total composition. The total amount of components a), b), c), d), e) and f) may be 90-100 wt%, for example 90-99 wt%, for example 92-95 wt%, with respect to the total composition.

### Other additives h)

The thermoplastic composition according to the invention may further comprise h) from 0 to 10 wt% of one or more other additives, relative to the total weight of the composition. These include the customary additives such as stabilizers against thermal or thermo-oxidative degradation, stabilizers against hydrolytic degradation, stabilizers against degradation from light, in particular UV light, and/or photo-oxidative degradation and processing aids such as release agents and lubricants. Suitable examples of such additives and their customary amounts are stated in the aforementioned Kunststoff Handbuch, 3/1. The total amount of the additives is typically 0 to 5 wt%, for example 0.5 to 3 wt%.

### Total of a), b), c), d), e), f), g) and h)

Preferably, the total amount of the components a), b), c), d), e), f), g) and h) is at least 95 wt% of the total composition and is preferably 100 wt% of the total composition. The total amount of components a), b), c), d), e), f), g) and h) may be 95-100 wt%, for example 95-99.5 wt%, for example 97-99 wt%, with respect to the total composition.

The components b) and c) and other optional components as described above may be introduced into the thermoplastic resin a) by means of suitable mixing devices such as single-screw or twin-screw extruders, preferably a twin-screw extruder is used. Preferably, thermoplastic resin pellets are introduced into the extruder together with at least components b) and c) and extruded, then quenched in a water bath and then pelletized. The invention therefore further relates to a process for producing a thermoplastic composition according to the present invention by melt mixing components a), b), c) and optional components as described above.

The invention further relates to a reinforced composition consisting of the thermoplastic composition according to the invention and reinforcing agents such as glass fibres. The weight ratio of the reinforcing agents such as glass fibres to the thermoplastic composition according to the present invention in such a reinforced composition may be at most e.g. 1:1 or 1:2, and at least e.g. 1:20 or 1:10. Such a reinforced composition can be prepared by melt mixing components a), b), c) and optional components as described above and a reinforcing agent.

Some preferred embodiments of the invention relate to a thermoplastic composition comprising:
a) an aromatic polycarbonate resin;
b) a laser direct structuring additive and
c) a polyarylate resin
wherein the total amount of the components a) and c) is 75-99.5 wt% with respect to the total composition,
wherein a molded part of the composition is capable of achieving (has) UL94 V1 or V0 rating at a thickness of 3.0 mm (±10%) and/or UL94 V1 or V0 rating at a thickness of 1.5 mm (±10%),
wherein the amount of the component a) is 30-70 wt% with respect to the weight of the total composition,
wherein the amount of the component b) is 0.5-25 wt% with respect to the total composition,
wherein the amount of the component c) is 10-50 wt% with respect to the total composition,
wherein the total amount of the components a), b) and c) is at least 80 wt% with respect to the total composition.

Some preferred embodiments of the invention relate to a thermoplastic composition comprising:
a) an aromatic polycarbonate resin;
b) a laser direct structuring additive and
c) a polyarylate resin
wherein the total amount of the components a) and c) is 75-99.5 wt% with respect to the total composition,
wherein a molded part of the composition is capable of achieving (has) UL94 V1 or V0 rating at a thickness of 3.0 mm (±10%) and/or UL94 V1 or V0 rating at a thickness of 1.5 mm (±10%),
wherein the amount of the component a) is 30-70 wt% with respect to the weight of the total composition,
wherein the amount of the component b) is 0.5-25 wt% with respect to the total composition,
wherein the amount of the component c) is 10-50 wt% with respect to the total composition,
wherein the composition further comprises d) a silicon rubber, wherein the amount of the component d) is 1-20 wt% with respect to the total composition,
wherein the total amount of the components a), b), c) and d) is at least 85 wt% with respect to the total composition.

Some preferred embodiments of the invention relate to a thermoplastic composition comprising:
a) an aromatic polycarbonate resin;
b) a laser direct structuring additive and
c) a polyarylate resin
wherein the total amount of the components a) and c) is 75-99.5 wt% with respect to the total composition,
wherein a molded part of the composition is capable of achieving (has) UL94 V1 or V0 rating at a thickness of 3.0 mm (±10%) and/or UL94 V1 or V0 rating at a thickness of 1.5 mm (±10%),
wherein the amount of the component a) is 30-70 wt% with respect to the weight of the total composition,
wherein the amount of the component b) is 0.5-25 wt% with respect to the total composition,
wherein the amount of the component c) is 10-50 wt% with respect to the total composition,
wherein the composition further comprises e) a flame retardant, wherein the amount of the component e) is is 0.01-20 wt% with respect to the total composition,
wherein the total amount of a), b), c) and e) is at least 85 wt% with respect to the total composition.

Some preferred embodiments of the invention relate to a thermoplastic composition comprising:
a) an aromatic polycarbonate resin;
b) a laser direct structuring additive and
c) a polyarylate resin
wherein the total amount of the components a) and c) is 75-99.5 wt% with respect to the total composition,
wherein a molded part of the composition is capable of achieving (has) UL94 V1 or V0 rating at a thickness of 3.0 mm (±10%) and/or UL94 V1 or V0 rating at a thickness of 1.5 mm (±10%),
wherein the amount of the component a) is 30-70 wt% with respect to the weight of the total composition,
wherein the amount of the component b) is 0.5-25 wt% with respect to the total composition,
wherein the amount of the component c) is 10-50 wt% with respect to the total composition and
wherein the composition further comprises d) a silicon rubber, wherein the amount of the silicon rubber is 1-20 wt% with respect to the total composition and/or the composition further comprises e) a flame retardant, wherein the amount of the flame retardant is is 0.01-20 wt% with respect to the total composition, and
wherein the total amount of a), b), c) d) and e) is at least 85 wt% with respect to the total composition.

Some preferred embodiments of the invention relate to a thermoplastic composition comprising:
a) an aromatic polycarbonate resin;
b) a laser direct structuring additive and
c) a polyarylate resin
wherein the total amount of the components a) and c) is 75-99.5 wt% with respect to the total composition,
wherein a molded part of the composition is capable of achieving (has) UL94 V1 or V0 rating at a thickness of 3.0 mm (±10%) and/or UL94 V1 or V0 rating at a thickness of 1.5 mm (±10%),
wherein the amount of the component a) is 30-70 wt% with respect to the weight of the total composition,
wherein the amount of the component b) is 0.5-25 wt% with respect to the total composition,
wherein the amount of the component c) is 10-50 wt% with respect to the total composition and
wherein the composition further comprises f) an anti-drip agent, wherein the amount of the component f) is 0.05-2.0 wt% with respect to the total composition,
wherein the total amount of a), b), c) and f) is at least 85 wt% with respect to the total composition.

Some preferred embodiments of the invention relate to a thermoplastic composition comprising:
a) an aromatic polycarbonate resin;
b) a laser direct structuring additive and
c) a polyarylate resin
wherein the total amount of the components a) and c) is 75-99.5 wt% with respect to the total composition,
wherein a molded part of the composition is capable of achieving (has) UL94 V1 or V0 rating at a thickness of 3.0 mm (±10%) and/or UL94 V1 or V0 rating at a thickness of 1.5 mm (±10%),
wherein the amount of the component a) is 30-70 wt% with respect to the weight of the total composition,
wherein the amount of the component b) is 0.5-25 wt% with respect to the total composition,
wherein the amount of the component c) is 10-50 wt% with respect to the total composition and
wherein the composition further comprises d) a silicon rubber, wherein the amount of the silicon rubber is 1-20 wt% with respect to the total composition and/or the composition further comprises e) a flame retardant, wherein the amount of the flame retardant is is 0.01-20 wt% with respect to the total composition and/or the composition further comprises f) an anti-drip agent, wherein the amount of the component f) is 0.05-2.0 wt% with respect to the total composition, and
wherein the total amount of a), b), c) d), e) and f) is at least 85 wt% with respect to the total composition.

It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein. It will therefore be appreciated that the combinations of the features relating to the moulding step, the irradiating step and the metallizing step of the process of the invention and the features relating to the composition according to the invention are described herein. For example, the present description discloses a process for producing a circuit carrier, comprising providing the molded part comprising the thermoplastic composition according to the invention; irradiating areas of said part on which conductive tracks are to be formed with laser radiation; and subsequently metalizing the irradiated areas, wherein the composition comprises component d) and the irradiation of the molded part is performed by infrared light having a wavelength from 800 to 25 000 nm.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

### Experiments

### EXAMPLES

- Comparative experiments (CEx) and example compositions (Ex) were prepared from the components as given in Table 1. Additionally, additives for Mold Release (0.3% Loxiol P861/3.5, supplied by Cognis) and Heat Stabilization (0.05% ADK Stab 2112, supplied by ADK Palmerole) were added.
- All sample compositions were prepared according the amounts as given in Table 2 to 6. All amounts are in weight percentage. In each of the experiments, samples were extruded on a co-rotating twin screw extruder at a temperature of 280°C to 300°C. The extrudate was granulated and the collected granulate was dried for 4 hours at a temperature of 120°C and subsequently injection moulded into test parts, using a melt temperature of approximately 290°C-310°C.

**Table 1**

| **Material** | **Type** | **Supplier** |
|---|---|---|
| PC 1 | PC with LVN (ISO 1628/4) = 50 ml/g | MEP |
| PC 2 | PC with LVN (ISO 1628/4) = 47.5 ml/g | MEP |
| Si Modifier | Kane Ace MR-02 | Kaneka |
| MBS Modifier | Kane Ace M511 | Kaneka |
| U-Polymer | Polyarylate resin (type: Powder RK) | Unitika |
| White Pigment | Kronos 2233 (TiO₂) | Kronos |
| LDS additive 1 | Shepherd LD5 (Copper Chromite Black Spinel) | Shepherd Technologies |
| LDS additive 2 | Stanostat CP5C (Tin Antimony Grey Cassiterite) | Keeling & Walker |
| PTFE 1 | Dispersion 40 (60% PTFE in water) | Dupont |
| PTFE 2 | METABLEN A-3800 (acrylate copolymer + PTFE mixture) | Mitsubishi Rayon |
| FR | RM 65 (potassium perfluoro butane sulfonate) | Miteni |

Flame retardancy was measured according to UL 94 testing method. In order to achieve a V-0, V-1 or V-2 rating, 5 specimens will have to be tested and pass the required criteria of the rating. In each test the flame was applied for 10 seconds to the specimen after which the afterflame time t1 was recorded. Then the flame was again applied for another 10 seconds and the second afterflame time t2 was recorded. The total flame out time (FOT) is defined as the total time t1 and the total time t2 for 5 specimens. The following tables summarize the results of the specimens conditioned for 48 hours at 23°C and 50%RH (relative humidity).

**Table 2**

| **Sample** | | **CEx 1** | **CEx 2** | **CEx 3** | **CEx 4** | **CEx 5** | **CEx 6** |
|---|---|---|---|---|---|---|---|
| Components | Unit | | | | | | |
| PC 1 | % | 99.65 | 69.65 | 99.53 | 69.53 | 99.18 | 69.18 |
| U-Polymer | % | | 30 | | 30 | | 30 |
| FR | % | | | 0.12 | 0.12 | 0.12 | 0.12 |
| PTFE 1 | % | | | | | 0.35 | 0.35 |
| Other Additives | % | 0.35 | 0.35 | 0.35 | 0.35 | 0.35 | 0.35 |
| Total | % | 100 | 100 | 100 | 100 | 100 | 100 |
| | | | | | | | |

| FR Performance 1.6 mm | | | | | | | |
|---|---|---|---|---|---|---|---|
| Vicat B50 (ISO 306) | °C | 147 | 156 | 147 | 156 | 147 | 157 |
| UL 94 @ 1.5 mm (48h-23°C-50%RH) | - | V-2 | V-2 | V-0 | V-0 | V-0 | V-0 |
| FOT @ 1.5 mm (48h-23°C-50%RH) | s | 63 | 68 | 16 | 19 | 20 | 22 |

From table 2, it can be understood that the addition of the polyarylate resin does not have an effect on the flame retardancy in the absence of an LDS additive. The presence of a flame retardant (CEx 3 and CEx 4) and of a PTFE (CEx 5 and CEx 6) does not influence this.

**Table 3**

| **Sample** | | **CEx 7** | **Ex 8** | **Ex 9** |
|---|---|---|---|---|
| Components | Unit | | | |
| PC 1 | % | 93 | 63 | 53 |
| U-Polymer | % | | 30 | 40 |
| FR | % | 0.15 | 0.15 | 0.15 |
| LDS additive 1 | % | 6 | 6 | 6 |
| PTFE 1 | % | 0.5 | 0.5 | 0.5 |
| Other Additives | % | 0.35 | 0.35 | 0.35 |
| Total | % | 100 | 100 | 100 |
| | | | | |

| FR Performance 1.6 mm | | | | |
|---|---|---|---|---|
| Vicat B50 | °C | 146 | 155 | 160 |
| UL 94 @ 1.5 mm (48h-23°C-50%RH) | - | V-0 | V-0 | V-0 |
| FOT @ 1.5 mm (48h-23°C-50%RH) | s | 26 | 22 | 16 |

Table 3 shows the effect of the polyarylate resin in the presence of an LDS additive and a flame retardant. From CEx 7 and Ex 8 and 9, it can be understood that the addition of the polyarylate resin improves the flame retardancy in the presence of an LDS additive and a flame retardant.

**Table 4**

| **Sample** | | **CEx 10** | **Ex 11** |
|---|---|---|---|
| Components | Unit | | |
| PC 1 | % | 86.15 | 56.15 |
| U-Polymer | % | | 30 |
| Si Modifier | % | 5 | 5 |
| LDS additive 1 | % | 8 | 8 |
| PTFE 1 | % | 0.5 | 0.5 |
| Other Additives | % | 0.35 | 0.35 |
| Total | % | 100 | 100 |
| | | | |

| FR Performance 1.6 mm | | | |
|---|---|---|---|
| Vicat B50 (ISO 306) | °C | 145 | 154 |
| UL 94 @ 1.5 mm (48h-23°C-50%RH) | - | V-0 | V-0 |
| FOT @ 1.5 mm (48h-23°C-50%RH) | s | 43 | 32 |
| UL 94 @ 3.0 mm (48h-23°C-50%RH) | - | V-0 | V-0 |
| FOT @ 3.0 mm (48h-23°C-50%RH) | s | 33 | 19 |

Table 4 shows the effect of the polyarylate resin in the presence of an LDS additive and a Si modifier. From CEx 10 and Ex 11, it can be understood that the addition of the polyarylate resin improves the flame retardancy in terms of FOT in the presence of an LDS additive and a Si modifier.

**Table 5**

| **Sample** | | **CEx 12** | **Ex 13** | **Ex 14** |
|---|---|---|---|---|
| Components | Unit | | | |
| PC 2 | % | 88.15 | 68.15 | 48.15 |
| U-Polymer | % | | 20 | 40 |
| Si Modifier | % | 5 | 5 | 5 |
| LDS additive 1 | % | 6 | 6 | 6 |
| PTFE 2 | % | 0.5 | 0.5 | 0.5 |
| Other Additives | % | 0.35 | 0.35 | 0.35 |
| Total | % | 100 | 100 | 100 |
| | | | | |

| FR Performance 1.6 mm | | | | |
|---|---|---|---|---|
| Vicat B50 (ISO 306) | °C | 142 | 150 | 156 |
| UL 94 @ 1.5 mm (48h-23°C-50%RH) | - | NC | V-1 | V-0 |
| FOT @ 1.5 mm (48h-23°C-50%RH) | s | 176 | 75 | 43 |
| UL 94 @ 3.0 mm (48h-23°C-50%RH) | - | V-1 | V-1 | V-0 |
| FOT @ 3.0 mm (48h-23°C-50%RH) | s | 65 | 52 | 26 |

Table 5 shows the effect of the polyarylate resin in the presence of an LDS additive and a Si modifier. From CEx 12 and Ex 13 and 14, it can be understood that the addition of the polyarylate resin improves the flame retardancy in the presence of an LDS additive and a Si modifier.

The improvement is significant in this set of experiments. In this set, different types of polycarbonate and PTFE are used compared to the experiments in Table 4. Further, the amount of the LDS additive is lower. The compositions in this set are preferable due to the use of a PTFE which has better handling and the lower amount of the LDS additive which leads to a lower cost.

In the absence of the U-polymer, the composition has NC rating at 1.5 mm, which makes the composition unsuitable for applications requiring high flame retardancy. The addition of 20 wt% of U-polymer resulted in V-1 rating at 1.5 mm and the addition of 40 wt% of U-polymer even resulted in V-0 rating at 1.5 mm, making the composition usable for applications requiring high flame retardancy.

**Table 6**

| **Sample** | | **CEx 15** | **CEx 16** | **CEx 17** | **CEx 18** | **CEx 19** | **Ex 20** |
|---|---|---|---|---|---|---|---|
| Components | Unit | | | | | | |
| PC 1 | | 91.65 | 61.65 | | | | |
| PC 2 | % | | | 86.65 | 56.65 | 86.15 | 56.15 |
| U-Polymer | % | | 30 | | 30 | | 30 |
| MBS Modifier | % | | | 5 | 5 | | |
| Si Modifier | % | | | | | 5 | 5 |
| LDS additive 2 | % | 4 | 4 | 4 | 4 | 4 | 4 |
| White Pigment | % | 4 | 4 | 4 | 4 | 4 | 4 |
| PTFE 1 | % | | | | | 0.5 | 0.5 |
| Other Additives | % | 0.35 | 0.35 | 0.35 | 0.35 | 0.35 | 0.35 |
| Total | % | 100 | 100 | 100 | 100 | 100 | 100 |
| | | | | | | | |

| FR Performance 1.6 mm | | | | | | | |
|---|---|---|---|---|---|---|---|
| Vicat B50 (ISO 306) | °C | 146 | 154 | 144 | 153 | 144 | 153 |
| UL 94 @ 1.5 mm (48h-23°C-50%RH) | - | V-2 | V-2 | V-2 | V-2 | V-1 | V-1 |
| FOT @ 1.5 mm (48h-23°C-50%RH) | s | 62 | 85 | 93 | 111 | 108 | 71 |
| UL 94 @ 3.0 mm (48h-23°C-50%RH) | - | V-2 | V-2 | V-2 | NC | V-1 | V-0 |
| FOT @ 3.0 mm (48h-23°C-50%RH) | s | 61 | 50 | 132 | 206 | 47 | 25 |

Table 6 shows the effect of the Si modifier for allowing the polyarylate resin to have its effect of improving flame retardancy.

From CEx 15 and CEx 16, it can be understood that the addition of the polyarylate resin does not have an effect on the flame retardancy in the absence of a Si modifier or a flame retardant or an anti-drip agent.
From CEx 17, CEx 18, CEx 19 and Ex 20, it can be understood that the addition of the polyarylate resin does not have an effect on the flame retardancy in the presence of a MBS modifier, but does have an effect on the flame retardancy in the presence of a Si modifier.

**Table 7**

| **Sample** | | **CEx 21** | **Ex 22** | **CEx 23** | **Ex 24** |
|---|---|---|---|---|---|
| Components | Unit | | | | |
| PC 1 | | 91.5 | 61.5 | 91.15 | 61.15 |
| U-Polymer | % | | 30 | | 30 |
| LDS additive 2 | % | 4 | 4 | 4 | 4 |
| White Pigment | % | 4 | 4 | 4 | 4 |
| FR | % | 0.15 | 0.15 | | |
| PTFE 1 | % | | | 0.5 | 0.5 |
| Other Additives | % | 0.35 | 0.35 | 0.35 | 0.35 |
| Total | % | 100 | 100 | 100 | 100 |
| | | | | | |

| FR Performance 1.6 mm | | | | | |
|---|---|---|---|---|---|
| Vicat B50 (ISO 306) | °C | 146 | 154 | 144 | 154 |
| UL 94 @ 1.5 mm (48h-23°C-50%RH) | - | V-2 | V-2 | V-1 | V-1 |
| FOT @ 1.5 mm (48h-23°C-50%RH) | s | 39 | 27 | 105 | 67 |
| UL 94 @ 3.0 mm (48h-23°C-50%RH) | - | V-2 | V-1 | V-1 | V-0 |
| FOT @ 3.0 mm | s | 95 | 61 | 61 | 41 |
| (48h-23°C-50%RH) | | | | | |

Table 7 shows the effect of the polyarylate resin in the presence of an LDS additive and a flame retardant or an anti-drip agent.

From CEx 21 and Ex 22, it can be understood that the addition of the polyarylate resin improves the flame retardancy in the presence of an LDS additive and a flame retardant (without an anti-drip agent). In the absence of the U-polymer, the composition has V-2 rating at both 1.5 mm and 3.0 mm. The addition of 30 wt% of U-polymer resulted in V-1 rating at 3.0 mm, making the composition usable for applications requiring reasonably high flame retardancy even without an anti-drip agent.

From CEx 23 and Ex 24, it can be understood that the addition of the polyarylate resin improves the flame retardancy in the presence of an LDS additive and an anti-drip agent (without a flame retardant).

In the absence of the U-polymer, the composition has V-1 rating at both 1.5 mm and 3.0 mm. The addition of 30 wt% of U-polymer resulted in V-0 rating at 3.0 mm, making the composition usable for applications requiring high flame retardancy even without a flame retardant or a Si modifier.

## Claims

1. A thermoplastic composition comprising:
a) an aromatic polycarbonate resin;
b) a laser direct structuring additive and
c) a polyarylate resin
wherein the total amount of the components a) and c) is 75-99.5 wt% with respect to the total composition,
wherein a molded part of the composition has UL94 V1 or V0 rating at a thickness of 3.0 mm (±10%) and/or UL94 V1 or V0 rating at a thickness of 1.5 mm (±10%).

2. The composition according to any one of the preceding claims, wherein the amount of the component a) is 30-70 wt%, for example at least 40-60 wt%, for example at least 45-55 wt%, with respect to the total composition, and/or the amount of the component c) is 10-50 wt%, for example 20-40 wt%, for example 25-35 wt%, with respect to the total composition.

3. The composition according to any one of the preceding claims, wherein the amount of the component b) is 0.5-25 wt%, more preferably 1-20 wt%, more preferably 3-15 wt%, more preferably 5-10 wt%, with respect to the total composition.

4. The composition according to any one of the preceding claims, wherein the composition further comprises d) a silicon rubber, wherein preferably the amount of the component d) is 1-20 wt%, 2-15 wt% or 3-10 wt%, with respect to the total composition.

5. The composition according to any one of the preceding claims, wherein the composition further comprises e) a flame retardant, wherein preferably the amount of the component e) is 0.01-20 wt%, 0.1-15 wt% or 1-10 wt%, with respect to the total composition.

6. The composition according to any one of the preceding claims, wherein the composition further comprises f) an anti-drip agent, wherein preferably the amount of the component f) is 0.05-2.0 wt%, more preferably 0.1-1.5 wt%, more preferably 0.2-1.0 wt%, with respect to the total composition.

7. The composition according to any one of the preceding claims, wherein a molded part of an identical reference composition in the absence of the polyarylate resin has UL94 V1 or V0 rating at a thickness of 3.0 mm (±10%).

8. The composition according to any one of the preceding claims, wherein the Vicat B50, which is Vicat Softening Temperature measured according to ISO 306 with a load of 50 N at a rate of 50°C/hour, of a molded part of the composition is higher than 140 °C.

9. The composition according to any one of the preceding claims, wherein the component b) is a metal oxide selected from the group consisting of a heavy metal mixture oxide spinel, such as copper containing spinels such as copper chromium oxide spinel, copper molybdenum oxide spinel and copper chromium manganese oxide spinel; a copper salt, such as copper hydroxide phosphate copper phosphate, copper sulfate, cuprous thiocyanate; organic metal complexes (such as palladium/palladium-containing heavy metal complexes); tin containing oxides such as antimony tin oxide (antimony-doped tin oxide), bismuth tin oxide (bismuth-doped tin oxide), aluminum tin oxide (aluminum-doped tin oxide) and molybdenum tin oxide (molybdenum-doped tin oxide); a zinc containing metal oxide such as aluminum zinc oxide (aluminum-doped zinc oxide), ZnₓNi₁₋ₓFe₂O₄, wherein the x is higher than 0.60 and lower than 0.85; a tin containing metal oxide; a magnesium containing metal oxide; an aluminum containing metal oxide; a gold containing metal oxide; a silver containing metal oxide; and combinations thereof.

10. The composition according to any one of the preceding claims, wherein the amount of the component a) is 30-70 wt% with respect to the weight of the total composition,
wherein the amount of the component b) is 0.5-25 wt% with respect to the total composition,
wherein the amount of the component c) is 10-50 wt% with respect to the total composition and
wherein the composition further comprises d) a silicon rubber, wherein the amount of the silicon rubber is 1-20 wt% with respect to the total composition and/or the composition further comprises e) a flame retardant, wherein the amount of the flame retardant is is 0.01-20 wt% with respect to the total composition and/or the composition further comprises f) an anti-drip agent, wherein the amount of the component f) is 0.05-2.0 wt% with respect to the total composition, and
wherein the total amount of a), b), c) d), e) and f) is at least 85 wt% with respect to the total composition.

11. A molded part comprising the thermoplastic composition according to any one of claims 1-10.

12. A process for producing a circuit carrier, comprising providing the molded part according to claim 11; irradiating areas of said part on which conductive tracks are to be formed with laser radiation; and subsequently metalizing the irradiated areas.

13. The circuit carrier obtainable by the process according to claim 12.

14. An antenna comprising the circuit carrier according to claim 13.

15. Use of a polyarylate resin as an agent for reducing flame out time in a thermoplastic composition comprising a) an aromatic polycarbonate resin and b) a laser direct structuring additive,
wherein a molded part of a thermoplastic composition comprising: a) the aromatic polycarbonate resin; b) the laser direct structuring additive and c) the polyarylate resin, wherein the total amount of the components a) and c) is 75-99.5 wt% of the total composition, has UL94 V1 or V0 rating at a thickness of 3.0 mm (±10%) and/or UL94 V1 or V0 rating at a thickness of 1.5 mm (±10%).

## Patentansprüche

1. Thermoplastische Zusammensetzung umfassend:
a) ein aromatisches Polycarbonatharz;
b) ein Laser-Direktstrukturierungszusatzmittel und
c) ein Polyarylatharz
wobei die Gesamtmenge der Komponenten a) und c) 75-99,5 Gew.-% mit Bezug auf die gesamte Zusammensetzung beträgt,
wobei ein Formteil aus der Zusammensetzung eine UL94 V1- oder -V0-Einstufung bei einer Dicke von 3,0 mm (±10 %) und/oder eine UL94 V1- oder - V0-Einstufung bei einer Dicke von 1,5 mm (±10 %) aufweist.

2. Zusammensetzung nach einem der vorhergehenden Ansprüche, wobei die Menge der Komponente a) 30-70 Gew.-%, beispielsweise mindestens 40-60 Gew.-%, beispielsweise mindestens 45-55 Gew.-% mit Bezug auf die gesamte Zusammensetzung beträgt und/oder die Menge der Komponente c) 10-50 Gew.- %, beispielsweise 20-40 Gew.-%, beispielsweise 25-35 Gew.-%, mit Bezug auf die gesamte Zusammensetzung beträgt.

3. Zusammensetzung nach einem der vorhergehenden Ansprüche, wobei die Menge der Komponente b) 0,5-25 Gew.-%, noch bevorzugter 1-20 Gew.-%, noch bevorzugter 3-15 Gew.-%, noch bevorzugter 5-10 Gew.-% mit Bezug auf die gesamte Zusammensetzung beträgt.

4. Zusammensetzung nach einem der vorhergehenden Ansprüche, wobei die Zusammensetzung ferner d) einen Siliciumkautschuk umfasst, wobei die Menge der Komponente d) bevorzugt 1-20 Gew.-%, 2-15 Gew.-% oder 3-10 Gew.-% mit Bezug auf die gesamte Zusammensetzung beträgt.

5. Zusammensetzung nach einem der vorhergehenden Ansprüche, wobei die Zusammensetzung ferner e) ein Flammschutzmittel umfasst, wobei die Menge der Komponente e) bevorzugt 0,01-20 Gew.-%, 0,1-15 Gew.-% oder 1-10 Gew.-% mit Bezug auf die gesamte Zusammensetzung beträgt.

6. Zusammensetzung nach einem der vorhergehenden Ansprüche, wobei die Zusammensetzung ferner f) ein Tropfverhinderungsmittel umfasst, wobei die Menge der Komponente f) bevorzugt 0,05-2,0 Gew.-%, noch bevorzugter 0,1-1,5 Gew.-%, noch bevorzugter 0,2-1,0 Gew.-% mit Bezug auf die gesamte Zusammensetzung beträgt.

7. Zusammensetzung nach einem der vorhergehenden Ansprüche, wobei ein Formteil aus einer identischen Bezugszusammensetzung in Abwesenheit des Polyarylatharzes eine UL94 V1- oder -V0-Einstufung bei einer Dicke von 3,0 mm (±10 %) aufweist.

8. Zusammensetzung nach einem der vorhergehenden Ansprüche, wobei der Vicat B50-Wert, der die Vicat-Aufweichungstemperatur ISO 306 entsprechend bei einer Belastung von 50 N bei einer Rate von 50 °C/Stunde gemessen ist, eines Formteils der Zusammensetzung höher als 140 °C ist.

9. Zusammensetzung nach einem der vorhergehenden Ansprüche, wobei die Komponente b) ein Metalloxid ist ausgewählt aus der Gruppe bestehend aus einem Schwermetallmischoxid-Spinell, wie beispielsweise kupferhaltigen Spinellen, wie beispielsweise Kupfer-Chromoxid-Spinell, Kupfer-Molybdänoxid-Spinell und Kupfer-Chrom-Manganoxid-Spinell; einem Kupfersalz, wie beispielsweise Kupferhydroxidphosphat, Kupferphosphat, Kupfersulfat, Kuprothiocyanat; organischen Metallkomplexen (wie beispielsweise Palladium/palladiumhaltigen Schwermetallkomplexen); zinnhaltigen Oxiden wie, beispielsweise Antimonzinnoxid, (mit Antimon dotiertem Zinnoxid), Wismutzinnoxid (mit Wismut dotiertem Zinnoxid), Aluminiumzinnoxid (mit Aluminium dotiertem Zinnoxid) und Molybdänzinnoxid (mit Molybdän dotiertem Zinnoxid); einem zinkhaltigen Metalloxid, wie beispielsweise Aluminium-Zinkoxid (mit Aluminium dotiertem Zinkoxid), ZnₓNi₁₋ₓFe₂O₄, wobei das x höher als 0,60 und geringer als 0,85 ist; einem zinnhaltigen Metalloxid; einem magnesiumhaltigen Metalloxid; einem aluminiumhaltigen Metalloxid; einem goldhaltigen Metalloxid; einem silberhaltigen Metalloxid; und Kombinationen davon.

10. Zusammensetzung nach einem der vorhergehenden Ansprüche, wobei die Menge der Komponente a) 30-70 Gew.-% mit Bezug auf das Gewicht der gesamten Zusammensetzung beträgt,
wobei die Menge der Komponente b) 0,5-25 Gew.-% mit Bezug auf die gesamte Zusammensetzung beträgt,
wobei die Menge der Komponente c) 10-50 Gew.-% mit Bezug auf die gesamte Zusammensetzung beträgt und
wobei die Zusammensetzung ferner d) einen Siliciumkautschuk umfasst, wobei die Menge des Siliciumkautschuks 1-20 Gew.-% mit Bezug auf die gesamte Zusammensetzung beträgt und/oder die Zusammensetzung ferner e) ein Flammschutzmittel umfasst, wobei die Menge des Flammschutzmittels 0,01-20 Gew.-% mit Bezug auf die gesamte Zusammensetzung beträgt und/oder die Zusammensetzung ferner f) ein Tropfverhinderungsmittel umfasst, wobei die Menge der Komponente f) 0,05-2,0 Gew.-% mit Bezug auf die gesamte Zusammensetzung beträgt und
wobei die gesamte Menge von a), b), c), d), e) und f) mindestens 85 Gew.-% mit Bezug auf die gesamte Zusammensetzung beträgt.

11. Formteil umfassend die thermoplastische Zusammensetzung nach einem der Ansprüche 1-10.

12. Verfahren für die Herstellung eines Schaltungsträgers, umfassend das Bereitstellen des Formteils nach Anspruch 11, Bestrahlen von Bereichen des Teils, auf denen leitfähige Führungsbahnen mit Laserstrahlung gebildet werden sollen; und daraufhin Metallisieren der bestrahlten Bereiche.

13. Schaltungsträger, der durch das Verfahren nach Anspruch 12 erhältlich ist.

14. Antenne umfassend den Schaltungsträger nach Anspruch 13.

15. Verwendung eines Polyarylharzes als Mittel zum Reduzieren der Ausflammenzeit in einer thermoplastischen Zusammensetzung umfassend a) ein aromatisches Polycarbonatharz und b) ein Laser-Direktstrukturierungszusatzmittel,
wobei ein Formteil aus einer thermoplastischen Zusammensetzung, der: a) das aromatische Polycarbonatharz; b) das Laser-Direktstrukturierungszusatzmittel und c) das Polyarylatharz umfasst, wobei die Gesamtmenge der Komponenten a) und c) 75-99,5 Gew.-% der gesamten Zusammensetzung beträgt, eine UL94 V1- oder -V0-Einstufung bei einer Dicke von 3,0 mm (±10 %) und/oder eine UL94 V1- oder-V0-Einstufung bei einer Dicke von 1,5 mm (±10 %) aufweist.

## Revendications

1. Composition thermoplastique, comprenant :
a) une résine de polycarbonate aromatique ;
b) un additif de structuration directe par laser et
c) une résine de polyarylate
dans laquelle la teneur totale des composants a) et c) est comprise entre 75 et 99,5 % en poids par rapport à la composition totale,
dans laquelle une partie moulée de la composition a un indice UL94 V1 ou V0 à une épaisseur de 3,0 mm (± 10 %) et/ou un indice UL94 V1 ou V0 à une épaisseur de 1,5 mm (± 10 %).

2. Composition selon l'une quelconque des revendications précédentes, dans laquelle la teneur en composant a) est comprise entre 30 et 70 % en poids, par exemple au moins comprise entre 40 et 60 % en poids, par exemple au moins comprise entre 45 et 55 % en poids, par rapport à la composition totale, et/ou la teneur en composant c) est comprise entre 10 et 50 % en poids, par exemple comprise entre 20 et 40 % en poids, par exemple comprise entre 25 et 35 % en poids, par rapport à la composition totale.

3. Composition selon l'une quelconque des revendications précédentes, dans laquelle la teneur en composant b) est comprise entre 0,5 et 25 % en poids, plus préférablement comprise entre 1 et 20 % en poids, plus préférablement comprise entre 3 et 15 % en poids, plus préférablement comprise entre 5 et 10 % en poids, par rapport à la composition totale.

4. Composition selon l'une quelconque des revendications précédentes, dans laquelle la composition comprend en outre d) un caoutchouc de silicone, dans laquelle de préférence la teneur en composant d) est comprise entre 1 et 20 % en poids, comprise entre 2 et 15 % en poids ou comprise entre 3 et 10 % en poids, par rapport à la composition totale.

5. Composition selon l'une quelconque des revendications précédentes, dans laquelle la composition comprend en outre e) un retardateur de flamme, dans laquelle de préférence la teneur en composant e) est comprise entre 0,01 et 20 % en poids, comprise entre 0,1 et 15 % en poids ou comprise entre 1 et 10 % en poids, par rapport à la composition totale.

6. Composition selon l'une quelconque des revendications précédentes, dans laquelle la composition comprend en outre f) un agent anti-goutte, dans laquelle de préférence la teneur en composant f) est comprise entre 0,05 et 2,0 % en poids, plus préférablement comprise entre 0,1 et 1,5 % en poids, plus préférablement comprise entre 0,2 et 1,0 % en poids, par rapport à la composition totale.

7. Composition selon l'une quelconque des revendications précédentes, dans laquelle une partie moulée d'une composition de référence identique en l'absence de la résine de polyarylate a un indice UL94 V1 ou V0 à une épaisseur de 3,0 mm (± 10 %).

8. Composition selon l'une quelconque des revendications précédentes, dans laquelle la Vicat B50, qui est la température de ramollissement Vicat mesurée selon la norme ISO 306 avec une charge de 50 N à un taux de 50 °C/heure, d'une partie moulée de la composition est supérieure à 140 °C.

9. Composition selon l'une quelconque des revendications précédentes, dans laquelle le composant b) est un oxyde de métal choisi dans le groupe constitué d'un spinelle d'oxyde de mélange de métaux lourds, tel que le cuivre contenant des spinelles tels que le spinelle d'oxyde de cuivre et de chrome, le spinelle d'oxyde de cuivre et de molybdène et le spinelle d'oxyde de cuivre, de chrome et de manganèse ; un sel de cuivre, tel que le phosphate d'hydroxyde de cuivre, le phosphate de cuivre, le sulfate de cuivre, le thiocyanate cuivreux ; les complexes de métaux organiques (tels que le palladium/les complexes de métaux lourds contenant du palladium) ; les oxydes contenant de l'étain tels que l'oxyde d'antimoine et d'étain (oxyde d'étain dopé à l'antimoine), l'oxyde de bismuth et d'étain (oxyde d'étain dopé au bismuth), l'oxyde d'aluminium et d'étain (oxyde d'étain dopé à l'aluminium) et l'oxyde de molybdène et d'étain (oxyde d'étain dopé au molybdène) ; un oxyde de métal contenant du zinc tel que l'oxyde d'aluminium et de zinc (oxyde de zinc dopé à l'aluminium), ZnₓNi₁₋ₓFe₂O₄, dans laquelle le x est supérieur à 0,60 et inférieur à 0,85 ; un oxyde de métal contenant de l'étain ; un oxyde de métal contenant du magnésium ; un oxyde de métal contenant de l'aluminium ; un oxyde de métal contenant de l'or ; un oxyde de métal contenant de l'argent ; et les combinaisons de ceux-ci.

10. Composition selon l'une quelconque des revendications précédentes, dans laquelle la teneur en composant a) est comprise entre 30 et 70 % en poids par rapport au poids de la composition totale,
dans laquelle la teneur en composant b) est comprise entre 0,5 et 25 % en poids par rapport à la composition totale,
dans laquelle la teneur en composant c) est comprise entre 10 et 50 % en poids par rapport à la composition totale et
dans laquelle la composition comprend en outre d) un caoutchouc de silicone, dans laquelle la teneur en caoutchouc de silicone est comprise entre 1 et 20 % en poids par rapport à la composition totale et/ou la composition comprend en outre e) un retardateur de flamme, dans laquelle la quantité du retardateur de flamme est comprise entre 0,01 et 20 % en poids par rapport à la composition totale et/ou la composition comprend en outre f) un agent anti-goutte, dans laquelle la teneur en composant f) est comprise entre 0,05 et 2,0 % en poids par rapport à la composition totale, et
dans laquelle la teneur totale de a), b), c), d), e) et f) est d'au moins 85 % en poids par rapport à la composition totale.

11. Partie moulée comprenant la composition thermoplastique selon l'une quelconque des revendications 1 à 10.

12. Procédé de production d'un support de circuit, comprenant l'apport de la partie moulée selon la revendication 11 ; le fait d'irradier des zones de ladite partie sur lesquelles des pistes conductrices doivent être formées à l'aide d'un rayonnement laser ; et ensuite le fait de métalliser des zones irradiées.

13. Support de circuit pouvant être obtenu par le procédé selon la revendication 12.

14. Antenne comprenant le support de circuit selon la revendication 13.

15. Utilisation d'une résine de polyarylate en tant qu'agent permettant de réduire le temps d'extinction de flamme dans une composition thermoplastique comprenant a) une résine de polycarbonate aromatique et b) un additif de structuration directe par laser,
dans laquelle une partie moulée d'une composition thermoplastique comprenant : a) la résine de polycarbonate aromatique ; b) l'additif de structuration directe par laser et c) la résine de polyarylate,
dans laquelle la teneur totale des composants a) et c) est comprise entre 75 et 99,5 % en poids par rapport à la composition totale, a un indice UL94 V1 ou V0 à une épaisseur de 3,0 mm (± 10 %) et/ou un indice UL94 V1 ou V0 à une épaisseur de 1,5 mm (± 10 %).
